# EUROPEAN PATENT APPLICATION

(11) **EP 4 821 890 A1**
(43) Date of publication of application: **14.10.2026**
(21) Application number: 24900552.1
(22) Date of filing: 29.11.2024
(51) Int. Cl.: C01G 25/00, C01B 32/00

(54) **CERIUM OXIDE STABILIZED ZIRCONIUM COMPOSITION**

(30) Priority: 06.12.2023 JP 2023205822
(71) Applicant: Daiichi Kigenso Kagaku Kogyo Co., Ltd., Osaka-shi, Osaka 541-0041 (JP)
(72) Inventor: YAMAMOTO,Takuya, Osaka-shi, Osaka 559-0025 (JP)
(74) Representative: Cabinet Beau de Loménie
(86) International application number: PCT/JP2024/042319
(87) International publication number: WO 2025/121258

(57) **Abstract**

This cerium oxide stabilized zirconium composition is characterized by having a composition that is represented by formula [1], and is also characterized by having a specific surface area of 5 m²/g to 20 m²/g inclusive.

Formula [1]: (ZrO₂)_{1-x-y}(CeO₂)ₓ(M₂O₃)_{y}

In formula [1], x and y are numbers that satisfy 0.10 ≤ x ≤ 0.40 and 0.02 ≤ y ≤ 0.12, and M represents one or more elements that are selected from the group consisting of scandium, yttrium, and ytterbium.

## Description

### TECHNICAL FIELD

The present invention relates to cerium oxide stabilized zirconium compositions.

### BACKGROUND ART

Conventionally, as an anode material in a SOFC (Solid Oxide Fuel Cell), a cermet of Ni particles and a ceramic powder exhibiting oxygen ion conductivity is used.

Non-Patent Document 1 discloses that a methane internal reforming fuel cell system by steam reforming was studied by applying (Sc₂O₃)_{0.10}(CeO₂)_{0.01}(ZrO₂)_{0.89} to an electrode cermet material.

In Non-Patent Document 2, CeO₂, ZrO₂, Al₂O₃, SiO₂, and TiO₂ have been studied as catalysts for a dry reforming reaction, and it is shown that CeO₂ has high reforming performance due to oxygen storage and release capacity and durability due to the effect of suppressing carbon deposition.

Non-Patent Document 3 discloses a study on Ce_{0.5}Zr_{0.5}O₂, and shows that the oxygen storage and release capacity is enhanced by the combination, and thus the reforming performance and the effect of suppressing carbon deposition are higher than those of CeO₂ and ZrO₂.

Non-Patent Document 4 discloses that as Ni carriers, Mg, La, and Ca are solid-solved in Ce_{0.5}Zr_{0.5}O₂, and oxygen vacancies are introduced to improve catalyst performance and durability.

### PRIOR ART DOCUMENTS

### NON-PATENT DOCUMENT

Non-Patent Document 1: Carbon deposition behavior on Ni-ScSZ anodes for internal reforming solid oxide fuel cells
Non-Patent Document 2: Nickel based catalysts for methane dry reforming: Effect of supports on catalytic activity and stability
Non-Patent Document 3: Ni/CeₓZr₁₋ₓO₂ catalyst prepared via one-step co-precipitation for CO₂ reforming of CH₄ to produce syngas: role of oxygen storage and release capacity (OSC) and oxygen vacancy formation energy (OVFE)
Non-Patent Document 4: High performance NiO/MOₓ-Ce_{0.5}Zr_{0.5}O₂ catalysts promoted with metal oxides for CH₄-H₂O reforming

### SUMMARY OF THE INVENTION

### PROBLEMS TO BE SOLVED BY THE INVENTION

Currently, in a commercially available fuel cell system, a reformer is provided at a front stage of a stack that performs power generation, city gas or the like is reformed by the reformer to produce hydrogen, and the hydrogen is supplied to the stack to perform power generation. Hydrogen is produced by a reformer provided separately from the stack, and this hydrogen is supplied to the stack, so that the load on the stack is reduced. On the other hand, since the reformer is provided separately from the stack, there are problems that the device size of the entire system increases and a problem that the device cost increases.

In recent years, internal reforming in which a fuel before reforming is directly introduced into a stack and reforming is performed on an electrode of the stack has been studied for the above problem.

However, in the case of an internal reforming-type fuel cell system mainly including dry reforming for obtaining hydrogen from CH₄ and CO₂, there is a problem that carbon deposited by a reforming reaction deteriorates reforming capability or deactivates an electrochemical reaction active point. In the methane internal reforming fuel cell system by the dry reforming reaction, the reforming reaction proceeds under the condition that carbon is more easily precipitated, and thus, for example, (Sc₂O₃)_{0.10}(CeO₂)_{0.01}(ZrO₂)_{0.89} disclosed in Non-Patent Document 1 cannot be used as the ceramic material constituting the anode cermet.

The present invention has been made in view of the above-described problems, and an object thereof is to provide a cerium oxide stabilized zirconium composition which has high oxygen ion conductivity and can be used as a material of an electrode having a high reforming function when a catalyst is supported (high catalyst function and longer stability of catalyst function).

### MEANS FOR SOLVING THE PROBLEMS

The present invention provides the following.
(1) A cerium oxide stabilized zirconium composition having a composition represented by formula [1],
   wherein the composition has a specific surface area of 5 m²/g or more and 20 m²/g or less.

   (ZrO₂)_{1-x-y}(CeO₂)ₓ(M₂O₃)_{y} [1]

(In formula [1], x and y are numbers that satisfy 0.10 ≤ x ≤ 0.40 and 0.02 ≤ y ≤ 0.12, and M represents one or more kinds that are selected from the group consisting of scandium, yttrium, and ytterbium.)

The solid solution of cerium oxide in the zirconium material can enhance the oxygen storage and release capacity and enhance the reforming function when the catalyst is supported, but cannot enhance the oxygen ion conductivity. On the other hand, the solid solution of scandium oxide, yttrium oxide, and ytterbium oxide in the zirconium material can introduce oxygen vacancies into the zirconium material and can improve the oxygen ion conductivity, but does not have the oxygen storage and release capacity.

According to the configuration of (1), the composition has a composition represented by formula [1], x and y are numbers that satisfy 0.10 ≤ x ≤ 0.40 and 0.02 ≤ y ≤ 0.12, and M is one or more kinds selected from the group consisting of scandium, yttrium, and ytterbium.

Since x is 0.10 or more, the oxygen storage and release capacity can be enhanced, carbon deposition can be suppressed, and the reforming function when the catalyst is supported can be enhanced. In addition, since x is 0.40 or less, as a result, an appropriate amount of the oxide of M can be contained, and the oxygen ion conductivity can be enhanced.

In addition, since y is 0.02 or more, the oxygen ion conductivity can be enhanced.

In addition, since y is 0.12 or less, as a result, an appropriate amount of cerium oxide can be contained, and the reforming function when the catalyst is supported can be enhanced.

As described above, according to the above configuration, since cerium oxide and the oxide of M are included in a certain composition range, it can be used as a material of an electrode having high oxygen ion conductivity and having a high reforming function when a catalyst is supported.

In addition, it is generally considered that a carrier used as a catalyst material preferably has a high specific surface area from the viewpoint of preventing agglomeration of a catalytic metal, but when the carrier is used as an electrode material, physical defects may occur due to volume shrinkage during sintering.

According to the configuration of (1), since the specific surface area is 20 m²/g or less, it is possible to prevent the occurrence of physical defects due to volume shrinkage during sintering when used as an electrode material.

The materials disclosed in Non-Patent Document 3 and Non-Patent Document 4 are materials assumed to be used for a catalyst. In particular, Non-Patent Document 4 discloses that the electrode material has a specific surface area of 50 m²/g or more in order to sufficiently secure dispersibility of Ni particles to be a reaction active point, but when the electrode material is considered to be used, the electrode material cannot be used in consideration of physical defects caused by a change in sintering volume during sintering.

Furthermore, since the materials disclosed in Non-Patent Document 3 and Non-Patent Document 4 are materials assumed to be used for a catalyst, in Non-Patent Document 3 and Non-Patent Document 4, measures for improving oxygen ion conductivity required for use as an electrode material of a fuel cell are not considered.

As described above, according to the configuration of (1), since the composition and the specific surface area are optimized, it can be used as a material of an electrode having high oxygen ion conductivity and having a high reforming function (high catalyst function and long-term stability of catalyst function) when a catalyst is supported.

The biogas produced by fermentation of the waste or the like is a gas containing CH₄ and CO₂ as main components, and the composition thereof is approximately CH₄ : CO₂ = 50 : 50 to 70 : 30. Since dry reforming uses CO₂ to reform methane to obtain hydrogen, biomass gas can be directly used for reforming.

According to the configuration of (1), since it has a high reforming function in the reforming reaction by dry reforming, the biogas can be suitably used as the fuel of the fuel cell.

Furthermore, the present invention provides the following.

(2) The cerium oxide stabilized zirconium composition according to (1), wherein M is one selected from the group consisting of scandium, yttrium, and ytterbium.

Furthermore, the present invention provides the following.

(3) The cerium oxide stabilized zirconium composition according to (1), wherein M is scandium.

Furthermore, the present invention provides the following.

(4) The cerium oxide stabilized zirconium composition according to any one of (1) to (3), wherein x and y are numbers that satisfy 0.10 ≤ x ≤ 0.30 and 0.06 ≤ y ≤ 0.10.

When x and y are numbers that satisfy 0.10 ≤ x ≤ 0.30 and 0.06 ≤ y ≤ 0.10, it can be used as a material of an electrode which has higher oxygen ion conductivity and further has a higher reforming function when a catalyst is supported.

Furthermore, the present invention provides the following.

(5) The cerium oxide stabilized zirconium composition according to any one of (1) to (4), wherein y is a number that satisfies 0.08 ≤ y ≤ 0.10.

When y is a number that satisfies 0.08 ≤ y ≤ 0.10, it can be used as a material of an electrode which has higher oxygen ion conductivity and further has a higher reforming function when a catalyst is supported.

Furthermore, the present invention provides the following.

(6) The cerium oxide stabilized zirconium composition according to any one of (1) to (5), having an oxygen storage and release capacity of 5 µmol/m² or more at 750°C.

When the oxygen storage and release capacity at 750°C is 5 µmol/m² or more, the reforming function when the catalyst is supported can be further enhanced.

Furthermore, the present invention provides the following.

(7) The cerium oxide stabilized zirconium composition according to any one of (1) to (6), wherein the conductivity at 700°C after heat treatment under the following heat treatment condition A is 9.0 × 10⁻⁴ S/cm or more.

### <Heat treatment condition A>

After molding at a pressure of 1.0 t/cm² for 2 minutes using a cold isostatic pressing method, heat treatment is performed at 1450°C for 2 hours in the air.

When the conductivity at 700°C after the heat treatment under the heat treatment condition A is 9.0 × 10⁻⁴ S/cm or more, high oxygen ion conductivity is exhibited, so that the electrode material can be suitably used.

Furthermore, the present invention provides the following.

(8) The cerium oxide stabilized zirconium composition according to any one of (1) to (7), wherein the conductivity at 800°C after heat treatment under the following heat treatment condition A is 3.0 × 10⁻³ S/cm or more.

### <Heat treatment condition A>

After molding at a pressure of 1.0 t/cm² for 2 minutes using a cold isostatic pressing method, heat treatment is performed at 1450°C for 2 hours in the air.

When the conductivity at 800°C after the heat treatment under the heat treatment condition A is 3.0 × 10⁻³ S/cm or more, the electrode material has high oxygen ion conductivity, and thus can be more suitably used as an electrode material.

Furthermore, the present invention provides the following.

(9) The cerium oxide stabilized zirconium composition according to any one of (1) to (8), wherein the conductivity at 900°C after heat treatment under the following heat treatment condition A is 7.5 × 10⁻³ S/cm or more.

### <Heat treatment condition A>

After molding at a pressure of 1.0 t/cm² for 2 minutes using a cold isostatic pressing method, heat treatment is performed at 1450°C for 2 hours in the air.

When the conductivity at 900°C after the heat treatment under the heat treatment condition A is 7.5 × 10⁻³ S/cm or more, the electrode material has high oxygen ion conductivity, and thus can be more suitably used as an electrode material.

Furthermore, the present invention provides the following.

(10) The cerium oxide stabilized zirconium composition according to any one of (1) to (9), wherein the cerium oxide stabilized zirconium composition is used as a carrier supporting a transition metal.

When used as a carrier supporting a transition metal, the carrier can have higher oxygen ion conductivity and a higher reforming function when used as an electrode.

Furthermore, the present invention provides the following.

(11) The cerium oxide stabilized zirconium composition according to (10), wherein the transition metal is nickel.

When the transition metal is nickel, it has higher oxygen ion conductivity and can have a higher reforming function when used as an electrode.

Furthermore, the present invention provides the following.

(12) The cerium oxide stabilized zirconium composition according to any one of (1) to (11), wherein after the heat treatment under the following heat treatment condition B, when a mixed gas of CH₄ : CO₂ : N₂ = 4.5 : 4.5 : 1 is circulated at a space velocity of 8000 h⁻¹ at 800°C, a CH₄ conversion is 90% or more, a CO₂ conversion is 85% or more, a H₂ selectivity is 40% or more, and a CO selectivity is 40% or more.

### <Heat treatment condition B>

Nickel oxide is mixed with the composition so as to have a content of 60% by mass, and subjected to a heat treatment at 1300°C for 2 hours in the air to form a cermet.

When, after the heat treatment under the following heat treatment condition B, when a mixed gas of CH₄ : CO₂ : N₂ = 4.5 : 4.5 : 1 is circulated at a space velocity of 8000 h⁻¹ at 800°C, a CH₄ conversion is 90% or more, a CO₂ conversion is 85% or more, a H₂ selectivity is 40% or more, and a CO selectivity is 40% or more, it can be said that CH₄ and CO₂ as raw materials are efficiently consumed, and H₂ and CO as a by-product are efficiently obtained.

### EFFECT OF THE INVENTION

According to the present invention, it is possible to provide a cerium oxide stabilized zirconium composition which has high oxygen ion conductivity and can be used as a material of an electrode having a high reforming function when a catalyst is supported (high catalyst function and long-term stability of catalyst function).

### MODE FOR CARRYING OUT THE INVENTION

Hereinafter, embodiments of the present invention will be described. However, the present invention is not limited only to these embodiments. In the present specification, the cerium oxide stabilized zirconium oxide composition is a general composition, and includes 10% by mass or less of an impurity metal compound including hafnium. In addition, the terms "comprise" and "contain" as used herein include the concepts of "comprise", "contain", "substantially consist of", and "consist of".

The maximum value and minimum value of content of each component shown below should each independently be considered as a preferable minimum value and a preferable maximum value of the present invention regardless of the contents of other components.

Further, the maximum values and the minimum values of various parameters (measured values and the like) shown below should each independently be considered as preferable minimum values and maximum values of the present invention regardless of the content (composition) of each component.

### [Cerium oxide stabilized zirconium oxide composition]

The cerium oxide stabilized zirconium composition according to the present embodiment has a composition represented by formula [1],and
the composition has a specific surface area of 5 m²/g or more and 20 m²/g or less.

(ZrO₂)_{1-x-y}(CeO₂)ₓ(M₂O₃)_{y} [1]

(In formula [1], x and y are numbers that satisfy 0.10 ≤ x ≤ 0.40 and 0.02 ≤ y ≤ 0.12, and M represents one or more kinds that are selected from the group consisting of scandium, yttrium, and ytterbium.)

The solid solution of cerium oxide in the zirconium material can enhance the oxygen storage and release capacity and enhance the reforming function when the catalyst is supported, but cannot enhance the oxygen ion conductivity. On the other hand, the solid solution of scandium oxide, yttrium oxide, and ytterbium oxide in the zirconium material can introduce oxygen vacancies into the zirconium material and can improve the oxygen ion conductivity, but does not have the oxygen storage and release capacity.

According to the cerium oxide stabilized zirconium composition, the composition has a composition represented by the formula [1], x and y are numbers that satisfy 0.10 ≤ x ≤ 0.40 and 0.02 ≤ y ≤ 0.12, and M is one or more kinds selected from the group consisting of scandium, yttrium, and ytterbium.

Since x is 0.10 or more, the oxygen storage and release capacity can be enhanced, and the reforming function when the catalyst is supported can be enhanced. In addition, since x is 0.40 or less, as a result, an appropriate amount of the oxide of M can be contained, and the oxygen ion conductivity can be enhanced.

In addition, since y is 0.02 or more, the oxygen ion conductivity can be enhanced.

In addition, since y is 0.12 or less, as a result, an appropriate amount of cerium oxide can be contained, and the reforming function when the catalyst is supported can be enhanced.

As described above, since the cerium oxide stabilized zirconium composition includes cerium oxide and the oxide of M in a certain composition range, it can be used as a material of an electrode having high oxygen ion conductivity and a high reforming function when a catalyst is supported.

x is preferably 0.10 or more, and more preferably 0.20 or more.

x is preferably 0.30 or less.

x is preferably a number that satisfies 0.10 ≤ x ≤ 0.30, and more preferably a number that satisfies 0.20 ≤ x ≤ 0.30.

The y is preferably 0.06 or more, and more preferably 0.08 or more.

The y is preferably 0.10 or less.

The y is preferably a number that satisfies 0.06 ≤ y ≤ 0.10, and more preferably a number that satisfies 0.08 ≤ y ≤ 0.10.

M is preferably one selected from the group consisting of scandium, yttrium, and ytterbium.

The M is more preferably scandium.

When M is scandium, a higher conductivity than other elements (yttrium, ytterbium) can be exhibited.

The cerium oxide stabilized zirconium composition has a specific surface area of 5 m²/g or more and 20 m²/g or less. Since the specific surface area is 20 m²/g or less, it is possible to prevent the occurrence of physical defects due to volume shrinkage during sintering when used as an electrode material.

The specific surface area is preferably 15 m²/g or less, and more preferably 12 m²/g or less.

The specific surface area is preferably 7 m²/g or more from the viewpoint of securing an area for performing a dry reforming reaction.

The specific surface area is preferably 5 m²/g or more and 15 m²/g or less, and more preferably 7 m²/g or more and 12 m²/g or less.

The cerium oxide stabilized zirconium oxide composition may further contain a rare earth element other than Ce, Sc, Y, and Yb. The content of rare earth elements other than Ce, Sc, Y, and Yb is preferably 1 mol% or less, more preferably 0.5 mol% or less, and still more preferably 0.1 mol% or less from the viewpoint of suppressing a decrease in sintering characteristics, catalytic activity, and oxygen ion conductivity.

The cerium oxide stabilized zirconium oxide composition may contain Na₂O, SO₄, and Cl derived from a production process or the like. The contents of Na₂O, SO₄, and Cl are preferably 0.1% by mass or less, more preferably 0.01% by mass or less, and still more preferably 0.005% by mass or less from the viewpoint of suppressing a decrease in sintering characteristics, catalytic activity, and oxygen ion conductivity. The contents of Na₂O, SO₄, and Cl can be 0.1% by mass or less by controlling synthesis conditions and a washing step.

The cerium oxide stabilized zirconium oxide composition may contain Al₂O₃ as a sintering aid for improving sintering characteristics. The content of Al₂O₃ is preferably 1% by mass or less, more preferably 0.5% by mass or less, still more preferably 0.25% by mass or less, and particularly preferably 0.01% by mass or less.

The cerium oxide stabilized zirconium oxide composition preferably has an oxygen storage and release capacity (OSC) of 5 µmol/m² or more at 750°C. When the oxygen storage and release capacity at 750°C is 5 µmol/m² or more, the reforming function when the catalyst is supported can be further enhanced.

The oxygen storage and release capacity at 750°C is more preferably 7 µmol/m² or more, still more preferably 10 µmol/m² or more, particularly preferably 13 µmol/m² or more, particularly preferably 14 µmol/m² or more, and particularly preferably 17 µmol/m² or more.

The oxygen storage and release capacity at 750°C is preferably as large as possible, and is, for example, 40 µmol/m² or less, 50 µmol/m² or less, or the like.

The oxygen storage and release capacity at 750°C is more preferably 7 µmol/m² or more and 50 µmol/m² or less, still more preferably 10 µmol/m² or more and 50 µmol/m² or less, particularly preferably 13 µmol/m² or more and 50 µmol/m² or less, particularly preferably 14 µmol/m² or more and 50 µmol/m² or less, and particularly preferably 17 µmol/m² or more and 40 µmol/m² or less.

The cerium oxide stabilized zirconium oxide composition preferably has a conductivity at 700°C of 9.0 × 10⁻⁴ S/cm or more after heat treatment under the following heat treatment condition A.

### <Heat treatment condition A>

After molding at a pressure of 1.0 t/cm² for 2 minutes using a cold isostatic pressing method, heat treatment is performed at 1450°C for 2 hours in the air.

When the conductivity at 700°C after the heat treatment under the heat treatment condition A is 9.0 × 10⁻⁴ S/cm or more, high oxygen ion conductivity is exhibited, so that the electrode material can be suitably used.

The conductivity at 700°C is more preferably 0.95 × 10⁻³ S/cm or more, still more preferably 1.0 × 10⁻³ S/cm or more, particularly preferably 2.0 × 10⁻³ S/cm or more, particularly preferably 3.0 × 10⁻³ S/cm or more, and particularly preferably 5.0 × 10⁻³ S/cm or more.

The conductivity at 700°C is preferably as high as possible, and is, for example, 4.0 × 10⁻² S/cm or less, 5.0 × 10⁻² S/cm or less, or the like.

The conductivity at 700°C is more preferably 0.95 × 10⁻³ S/cm or more and 5.0 × 10⁻² S/cm or less, still more preferably 1.0 × 10⁻³ S/cm or more and 5.0 × 10⁻² S/cm or less, particularly preferably 2.0 × 10⁻³ S/cm or more and 5.0 × 10⁻² S/cm or less, particularly preferably 3.0 × 10⁻³ S/cm or more and 5.0 × 10⁻² S/cm or less, and particularly preferably 5.0 × 10⁻³ S/cm or more and 4.0 × 10⁻² S/cm or less.

The cerium oxide stabilized zirconium oxide composition preferably has a conductivity at 800°C of 3.0 × 10⁻³ S/cm or more after heat treatment under the following heat treatment condition A.

### <Heat treatment condition A>

After molding at a pressure of 1.0 t/cm² for 2 minutes using a cold isostatic pressing method, heat treatment is performed at 1450°C for 2 hours in the air.

When the conductivity at 800°C after the heat treatment under the heat treatment condition A is 3.0 × 10⁻³ S/cm or more, the electrode material has high oxygen ion conductivity, and thus can be more suitably used as an electrode material.

The conductivity at 800°C is more preferably 3.5 × 10⁻³ S/cm or more, still more preferably 4.0 × 10⁻³ S/cm or more, particularly preferably 5.0 × 10⁻³ S/cm or more, particularly preferably 8.0 × 10⁻³ S/cm or more, and particularly preferably 1.0 × 10⁻² S/cm or more.

The conductivity at 800°C is preferably as high as possible, and is, for example, 9.0 × 10⁻² S/cm or less, 1.0 × 10⁻¹ S/cm or less, or the like.

The conductivity at 800°C is more preferably 3.5 × 10⁻³ S/cm or more and 1.0 × 10⁻¹ S/cm or less, still more preferably 4.0 × 10⁻² S/cm or more and 1.0 × 10⁻¹ S/cm or less, particularly preferably 5.0 × 10⁻³ S/cm or more and 1.0 × 10⁻¹ S/cm or less, particularly preferably 8.0 × 10⁻³ S/cm or more and 1.0 × 10⁻¹ S/cm or less, and particularly preferably 1.0 × 10⁻² S/cm or more and 9.0 × 10⁻² S/cm or less.

The cerium oxide stabilized zirconium oxide composition preferably has a conductivity at 900°C of 7.5 × 10⁻³ S/cm or more after heat treatment under the following heat treatment condition A.

### <Heat treatment condition A>

After molding at a pressure of 1.0 t/cm² for 2 minutes using a cold isostatic pressing method, heat treatment is performed at 1450°C for 2 hours in the air.

When the conductivity at 900°C after the heat treatment under the heat treatment condition A is 7.5 × 10⁻³ S/cm or more, the electrode material has high oxygen ion conductivity, and thus can be more suitably used as an electrode material.

The conductivity at 900°C is more preferably 9.0 × 10⁻³ S/cm or more, still more preferably 1.0 × 10⁻² S/cm or more, particularly preferably 1.5 × 10⁻² S/cm or more, particularly preferably 1.8 × 10⁻² S/cm or more, and particularly preferably 2.0 × 10⁻² S/cm or more.

The conductivity at 900°C is preferably as high as possible, and is, for example, 2.0 × 10⁻¹ S/cm or less, 2.5 × 10⁻¹ S/cm or less, or the like.

The conductivity at 900°C is more preferably 9.0 × 10⁻³ S/cm or more and 2.5 × 10⁻¹ S/cm or less, still more preferably 1.0 × 10⁻² S/cm or more and 2.5 × 10⁻¹ S/cm or less, particularly preferably 1.5 × 10⁻² S/cm or more and 2.5 × 10⁻¹ S/cm or less, particularly preferably 1.8 × 10⁻² S/cm or more and 2.5 × 10⁻¹ S/cm or less, and particularly preferably 2.0 × 10⁻² S/cm or more and 2.0 × 10⁻¹ S/cm or less.

It is preferable that the cerium oxide stabilized zirconium oxide composition, after the heat treatment under the following heat treatment condition B, when a mixed gas of CH₄ : CO₂ : N₂ = 4.5 : 4.5 : 1 is circulated at a space velocity of 8000 h⁻¹ at 800°C, has a CH₄ conversion of 90% or more, a CO₂ conversion of 85% or more, a H₂ selectivity of 40% or more, and a CO selectivity of 40% or more.

### <Heat treatment condition B>

Nickel oxide is mixed with the composition so as to have a content of 60% by mass, and subjected to a heat treatment at 1300°C for 2 hours in the air to form a cermet.

When, after the heat treatment under the following heat treatment condition B, when a mixed gas of CH₄ : CO₂ : N₂ = 4.5 : 4.5 : 1 is circulated at a space velocity of 8000 h⁻¹ at 800°C, a CH₄ conversion is 90% or more, a CO₂ conversion is 85% or more, a H₂ selectivity is 40% or more, and a CO selectivity is 40% or more, it can be said that CH₄ and CO₂ as raw materials are efficiently consumed, and H₂ and CO as a by-product are efficiently obtained.

Here, the CH₄ conversion, the CO₂ conversion, the H₂ selectivity, and the CO selectivity are values obtained by the following formulas. 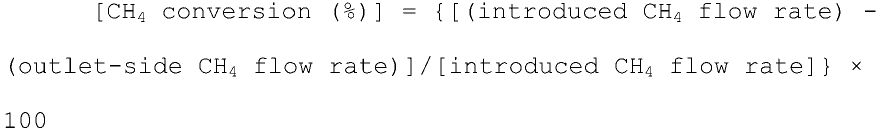 [CH4 conversion (%)] = {[(introduced CH4 flow rate) - (outlet-side CH4 flow rate)]/[introduced CH4 flow rate]} × 100 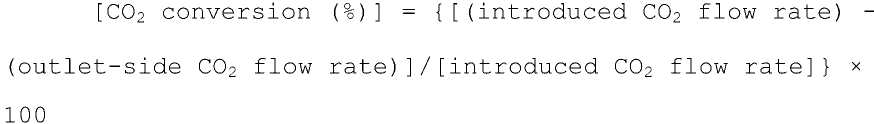 [CO2 conversion (%)] = {[(introduced CO2 flow rate) - (outlet-side CO2 flow rate)]/[introduced CO2 flow rate]} × 100 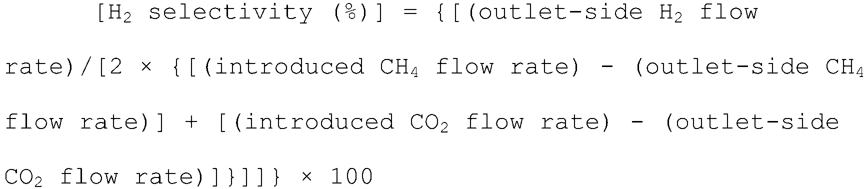 [H2 selectivity (%)] = {[(outlet-side H2 flow rate)/[2 × {[(introduced CH4 flow rate) - (outlet-side CH4 flow rate)] + [(introduced CO2 flow rate) - (outlet-side CO2 flow rate)]}]]} × 100 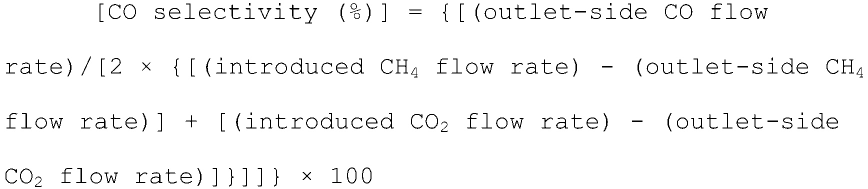 [CO selectivity (%)] = {[(outlet-side CO flow rate)/[2 × {[(introduced CH4 flow rate) - (outlet-side CH4 flow rate)] + [(introduced CO2 flow rate) - (outlet-side CO2 flow rate)]}]]} × 100

The CH₄ conversion is more preferably 95% or more, still more preferably 96% or more, particularly preferably 96.5% or more, and particularly preferably 96.7% or more.

The CH₄ conversion is preferably as large as possible, and is, for example, 98% or less, 99% or less, or the like.

The CH₄ conversion is more preferably 95% or more and 99% or less, still more preferably 96% or more and 99% or less, particularly preferably 96.5% or more and 99% or less, and particularly preferably 96.7% or more and 98% or less.

The CO₂ conversion is more preferably 88% or more, still more preferably 89% or more, particularly preferably 90% or more, and particularly preferably 90.5 or more.

The CO₂ conversion is preferably as large as possible, and is, for example, 98% or less, 99% or less, or the like.

The CO₂ conversion is more preferably 88% or more and 99% or less, still more preferably 89% or more and 98% or less, particularly preferably 90% or more and 99% or less, and particularly preferably 90.5% or more and 98% or less.

The H₂ selectivity is more preferably 43% or more, still more preferably 44% or more, particularly preferably 44.5% or more, and particularly preferably 44.8% or more.

The H₂ selectivity is preferably as large as possible, and is, for example, 48% or less, 49% or less, or the like.

The H₂ selectivity is more preferably 43% or more and 49% or less, still more preferably 44% or more and 49% or less, particularly preferably 44.5% or more and 49% or less, and particularly preferably 44.8% or more and 48% or less.

The CO selectivity is more preferably 40.3% or more, still more preferably 40.4% or more, particularly preferably 40.5% or more, and particularly preferably 40.7% or more.

The CO selectivity is preferably as large as possible, and is, for example, 48% or less, 49% or less, or the like.

The CO selectivity is more preferably 40.3% or more and 49% or less, still more preferably 40.4% or more and 49% or less, particularly preferably 40.5% or more and 49% or less, and particularly preferably 40.7% or more and 48% or less.

It is preferable that the cerium oxide stabilized zirconium oxide composition, after the heat treatment under the following heat treatment condition B, is subjected to circulation of a mixed gas of CH₄ : CO₂ : N₂ = 4.5 : 4.5 : 1 at 800°C at a space velocity of 8000 h⁻¹ for 2 hours, followed by a pretreatment at 200°C for 20 min under He circulation, and then the temperature is raised to 950°C at 10°C/min under circulation of 20% O₂-He (He containing 20% by volume of O₂) at 50 ml/min, wherein a CO₂ detection amount detected by a temperature programmed oxidation method is 20 mmol/g or less. When the CO₂ detection amount is 20 mmol/g or less, it can be said that carbon deposition is small.

### <Heat treatment condition B>

Nickel oxide is mixed with the composition so as to have a content of 60% by mass, and subjected to a heat treatment at 1300°C for 2 hours in the air to form a cermet.

The CO₂ detection amount is more preferably 17 mmol/g or less, still more preferably 16.5 mmol/g or less, particularly preferably 16 mmol/g or less, and particularly preferably 15.5 mmol/g or less.

The CO₂ detection amount is preferably as small as possible, and is, for example, 8 mmol/g or more, 5 mmol/g or more, or the like.

The CO₂ detection amount is more preferably 5 mmol/g or more and 17 mmol/g or less, still more preferably 5 mmol/g or more and 16.5 mmol/g or less, particularly preferably 5 mmol/g or more and 16 mmol/g or less, and particularly preferably 8 mmol/g or more and 15.5 mmol/g or less.

The cerium oxide stabilized zirconium oxide composition can be used as a carrier for supporting a transition metal. When used as a carrier supporting a transition metal, the carrier can have higher oxygen ion conductivity and a higher reforming function when used as an electrode.

Examples of the transition metal include Ni, Ti, V, Cr, Mn, Fe, Co, Cu, and Zn. Among them, Ni (nickel) is preferable. When the transition metal is nickel, the composition has higher oxygen ion conductivity and can have a higher reforming function when used as an electrode.

### [Method for producing cerium oxide stabilized zirconium oxide composition]

Hereinafter, an example of a method for producing a cerium oxide stabilized zirconium oxide composition will be described. However, the method for producing the cerium oxide stabilized zirconium oxide composition of the present invention is not limited to the following examples.

In the method for producing a cerium oxide stabilized zirconium oxide composition according to the present embodiment, first, a sulfuric acid chloride agent is added to a zirconium salt solution to obtain basic zirconium sulfate (basic zirconium sulfate-containing slurry).

The sulfating agent is not limited as long as the sulfating agent reacts with zirconium ions to form a sulfate (that is, a sulfating reagent), and examples thereof include sodium sulfate, potassium sulfate, and ammonium sulfate. The sulfating agent may be in any form such as a powder or solution form, but a solution (particularly, an aqueous solution) is preferable. The concentration of the solution to be used can be appropriately set.

The free acid concentration of the mixed solution is preferably set to 0.2 to 2.2 N (normal). Examples of the free acid include sulfuric acid, nitric acid, and hydrochloric acid. The type of the free acid is not limited, but hydrochloric acid is preferable in terms of its high productivity on an industrial scale.

The zirconium salt is only required to supply zirconium ions, and for example, zirconium oxynitrate, zirconium oxychloride, and zirconium nitrate can be used. These may be used singly, or two or more of them may be used in combination.

A solvent for forming the zirconium salt solution may be selected according to the type of the zirconium salt. Usually, water (pure water or ion-exchanged water) is preferable.

The concentration of the zirconium salt solution is not particularly limited, but generally, 5 to 250 g (particularly, 20 to 150 g) of zirconium oxide (ZrO₂) is desirably contained in 1000 g of the solvent.

The sulfating agent to be added is preferably added such that the weight ratio of sulfate radical (SO₄²⁻) to ZrO₂ is 0.3 or more and 0.7 or less.

Next, before the neutralization step described later, a salt solution or a compound of one or two or more kinds selected from the group consisting of cerium, scandium, yttrium, and ytterbium is added to basic zirconium sulfate (basic zirconium sulfate-containing slurry) so as to have the composition of the following formula [1].

(ZrO₂)_{1-x-y}(CeO₂)ₓ(M₂O₃)_{y} [1]

(In formula [1], x and y are numbers that satisfy 0.10 ≤ x ≤ 0.40 and 0.02 ≤ y ≤ 0.12, and M represents one or more kinds that are selected from the group consisting of scandium, yttrium, and ytterbium.)

Next, zirconium hydroxide is formed by neutralizing the basic zirconium sulfate. Specifically, zirconium hydroxide is formed by neutralizing the basic zirconium sulfate with an alkali. The alkali is not limited, and for example, ammonium hydroxide, ammonium bicarbonate, sodium hydroxide, and potassium hydroxide and the like can be used. Among these, sodium hydroxide is preferred from the viewpoint of industrial cost.

The amount of the alkali added is not particularly limited as long as zirconium hydroxide can be formed as a precipitate from a basic zirconium sulfate solution. Usually, the alkali is added such that the pH of the solution is 11 or more, and preferably 12 or more.

After the neutralization reaction, the zirconium hydroxide-containing solution is preferably held at 35 to 60°C for 1 hour or more. As a result, the precipitate formed is aged and is rendered easy to be collected by filtration.

Next, the zirconium hydroxide is collected by a solid-liquid separation method. For example, filtration, centrifugation, and decantation and the like can be used.

After the zirconium hydroxide is collected, the zirconium hydroxide is preferably washed with water to remove impurities adhering.

The zirconium hydroxide may be dried by natural drying or heat drying.

Next, the zirconium hydroxide is heat-treated (fired) to obtain a cerium oxide stabilized zirconium oxide composition.

The heat treatment temperature is preferably 800°C or higher, more preferably 900°C or higher.

The heat treatment temperature is preferably 1300°C or lower, more preferably 1200°C or lower.

The heat treatment temperature is preferably 800°C or higher and 1300°C or lower, and more preferably 900°C or higher and 1200°C or lower.

The heat treatment time is preferably 1 hour or more, and more preferably 2 hours or more.

The heat treatment time is preferably 10 hours or less, and more preferably 6 hours or less.

The heat treatment time is preferably 1 hour or more and 10 hours or less, and more preferably 2 hours or more and 6 hours or less.

By setting the heat treatment temperature and the heat treatment time within the above numerical ranges, the specific surface area can be suitably controlled to 5 m²/g or more and 20 m²/g or less.

The heat treatment atmosphere is preferably air or an oxidizing atmosphere.

The obtained cerium oxide stabilized zirconium oxide composition may be subjected to a treatment for releasing aggregation for the purpose of, for example, improving handleability as necessary.

The method for producing the cerium oxide stabilized zirconium oxide composition according to the present embodiment has been described above.

### EXAMPLES

Hereinafter, the present invention will be described in detail with reference to Examples, but the present invention is not limited to the following Examples as long as they do not depart from the gist of the present invention. In the cerium oxide stabilized zirconium compositions obtained in Examples and Comparative Examples, hafnium is contained as unavoidable impurities in an amount of 1 to 3% by mass with respect to zirconium (calculated by the following formula (X)). <Formula X> 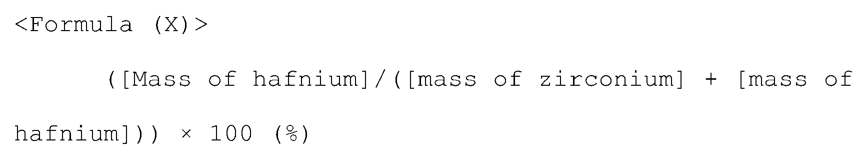 ([Mass of hafnium]/([mass of zirconium] + [mass of hafnium])) × 100 (%)

The maximum value and minimum value of the content of each component shown in the following Examples should be considered as the preferred minimum value and maximum value of the present invention regardless of the content of other components.

In addition, the maximum value and minimum value of the measured values shown in the following Examples should be considered to be the preferred minimum value and maximum value of the present invention regardless of the content (composition) of each component.

### [Preparation of cerium oxide stabilized zirconium oxide composition]

### (Example 1)

A 623 g portion of a zirconium oxychloride aqueous solution having a ZrO₂ concentration of 16% by mass and an 805 g portion of a 25% by mass sodium sulfate aqueous solution were mixed, and then heated to 96°C to obtain basic zirconium sulfate.

A 79 g portion of a cerium chloride aqueous solution having a CeO₂ concentration of 20 wt% and 25 g of a scandium chloride aqueous solution having a Sc₂O₃ concentration of 10% by mass were added to the obtained basic zirconium sulfate so as to have a composition of (ZrO₂)_{0.88}(CeO₂)_{0.10}(Sc₂O₃)_{0.02}, and were uniformly mixed. Next, a 500 g portion of a 25% by mass aqueous solution of sodium hydroxide was added to the resulting mixed solution so as to have a pH of 13 or more, thereby forming a hydroxide precipitate.

The obtained hydroxide precipitate was subjected to solid-liquid separation and washed with water. Next, the hydroxide was fired in an electric furnace at 1095°C for 5 hours in the air. The obtained oxide was pulverized and dispersed in a wet ball mill, and then the obtained slurry was dried at 120°C to obtain a cerium oxide stabilized zirconium oxide composition according to Example 1.

### (Example 2)

The sample was treated in the same manner as in Example 1 except that the composition was changed to (ZrO₂)_{0.85}(CeO₂)_{0.10}(Sc₂O₃)_{0.05} and the firing temperature was changed as shown in Table 1.

### (Example 3)

The sample was treated in the same manner as in Example 1 except that the composition was changed to (ZrO₂)_{0.82}(CeO₂)_{0.10}(Sc₂O₃)_{0.08} and the firing temperature was changed as shown in Table 1.

### (Example 4)

The sample was treated in the same manner as in Example 1 except that the composition was changed to (ZrO₂)_{0.80}(CeO₂)_{0.10}(Sc₂O₃)_{0.10} and the firing temperature was changed as shown in Table 1.

### (Example 5)

The sample was treated in the same manner as in Example 1 except that the composition was changed to (ZrO₂)_{0.78}(CeO₂)_{0.10}(Sc₂O₃)_{0.12} and the firing temperature was changed as shown in Table 1.

### (Example 6)

The sample was treated in the same manner as in Example 1 except that the composition was changed to (ZrO₂)_{0.78}(CeO₂)_{0.20}(Sc₂O₃)_{0.02} and the firing temperature was changed as shown in Table 1.

### (Example 7)

The sample was treated in the same manner as in Example 1 except that the composition was changed to (ZrO₂)_{0.75}(CeO₂)_{0.20}(Sc₂O₃)_{0.05} and the firing temperature was changed as shown in Table 1.

### (Example 8)

The sample was treated in the same manner as in Example 1 except that the composition was changed to (ZrO₂)_{0.72}(CeO₂)_{0.20}(Sc₂O₃)_{0.08} and the firing temperature was changed as shown in Table 1.

### (Example 9)

The sample was treated in the same manner as in Example 1 except that the composition was changed to (ZrO₂)_{0.70}(CeO₂)_{0.20}(Sc₂O₃)_{0.10} and the firing temperature was changed as shown in Table 1.

### (Example 10)

The sample was treated in the same manner as in Example 1 except that the composition was changed to (ZrO₂)_{0.68}(CeO₂)_{0.20}(Sc₂O₃)_{0.12} and the firing temperature was changed as shown in Table 1.

### (Example 11)

The sample was treated in the same manner as in Example 1 except that the composition was changed to (ZrO₂)_{0.68}(CeO₂)_{0.30}(Sc₂O₃)_{0.02} and the firing temperature was changed as shown in Table 1.

### (Example 12)

The sample was treated in the same manner as in Example 1 except that the composition was changed to (ZrO₂)_{0.65}(CeO₂)_{0.30}(Sc₂O₃)_{0.05} and the firing temperature was changed as shown in Table 1.

### (Example 13)

The sample was treated in the same manner as in Example 1 except that the composition was changed to (ZrO₂)_{0.62}(CeO₂)_{0.30}(Sc₂O₃)_{0.08} and the firing temperature was changed as shown in Table 1.

### (Example 14)

The sample was treated in the same manner as in Example 1 except that the composition was changed to (ZrO₂)_{0.60}(CeO₂)_{0.30}(Sc₂O₃)_{0.10} and the firing temperature was changed as shown in Table 1.

### (Example 15)

The sample was treated in the same manner as in Example 1 except that the composition was changed to (ZrO₂)_{0.58}(CeO₂)_{0.30}(Sc₂O₃)_{0.12} and the firing temperature was changed as shown in Table 1.

### (Example 16)

The sample was treated in the same manner as in Example 1 except that the composition was changed to (ZrO₂)_{0.58}(CeO₂)_{0.40}(Sc₂O₃)_{0.02} and the firing temperature was changed as shown in Table 1.

### (Example 17)

The sample was treated in the same manner as in Example 1 except that the composition was changed to (ZrO₂)_{0.55}(CeO₂)_{0.40}(Sc₂O₃)_{0.05} and the firing temperature was changed as shown in Table 1.

### (Example 18)

The sample was treated in the same manner as in Example 1 except that the composition was changed to (ZrO₂)_{0.52}(CeO₂)_{0.40}(Sc₂O₃)_{0.08} and the firing temperature was changed as shown in Table 1.

### (Example 19)

The sample was treated in the same manner as in Example 1 except that the composition was changed to (ZrO₂)_{0.50}(CeO₂)_{0.40}(Sc₂O₃)_{0.10} and the firing temperature was changed as shown in Table 1.

### (Example 20)

The sample was treated in the same manner as in Example 1 except that the composition was changed to (ZrO₂)_{0.48}(CeO₂)_{0.40}(Sc₂O₃)_{0.12} and the firing temperature was changed as shown in Table 1.

### (Example 21)

The sample was treated in the same manner as in Example 1 except that the composition was changed to (ZrO₂)_{0.82}(CeO₂)_{0.10}(Y₂O₃)_{0.08} and the firing temperature was changed as shown in Table 1.

### (Example 22)

The sample was treated in the same manner as in Example 1 except that the composition was changed to (ZrO₂)_{0.815}(CeO₂)_{0.125}(Y₂O₃)_{0.06} and the firing temperature was changed as shown in Table 1.

### (Example 23)

The sample was treated in the same manner as in Example 1 except that the composition was changed to (ZrO₂)_{0.71}(CeO₂)_{0.25}(Y₂O₃)_{0.04} and the firing temperature was changed as shown in Table 1.

### (Example 24)

The sample was treated in the same manner as in Example 1 except that the composition was changed to (ZrO₂)_{0.82}(CeO₂)_{0.10}(Yb₂O₃)_{0.08} and the firing temperature was changed as shown in Table 1.

### (Example 25)

The sample was treated in the same manner as in Example 1 except that the composition was changed to (ZrO₂)_{0.75}(CeO₂)_{0.20}(Yb₂O₃)_{0.05} and the firing temperature was changed as shown in Table 1.

### (Comparative Example 1)

The sample was treated in the same manner as in Example 1 except that the composition was changed to (ZrO₂)_{0.89}(CeO₂)_{0.01}(Sc₂O₃)_{0.10} and the firing temperature was changed as shown in Table 1.

### (Comparative Example 2)

The sample was treated in the same manner as in Example 1 except that the composition was changed to (ZrO₂)_{0.92}(Y₂O₃)_{0.08} and the firing temperature was changed as shown in Table 1.

### (Comparative Example 3)

The sample was treated in the same manner as in Example 1 except that the composition was changed to (ZrO₂)_{0.68}(CeO₂)_{0.20}(Sc₂O₃)_{0.12} and the firing temperature was changed as shown in Table 1.

### (Comparative Example 4)

The sample was treated in the same manner as in Example 1 except that the composition was changed to (ZrO₂)_{0.68}(CeO₂)_{0.20}(Sc₂O₃)_{0.12} and the firing temperature was changed as shown in Table 1.

### (Comparative Example 5)

The sample was treated in the same manner as in Example 1 except that the composition was changed to (ZrO₂)_{0.50}(CeO₂)_{0.50} and the firing temperature was changed as shown in Table 1.

### [Measurement of specific surface area]

The specific surface area of each of the cerium oxide stabilized zirconium oxide compositions of Examples and Comparative Examples was measured by the BET method using a specific surface area meter ("Macsorb" manufactured by Mountech Co., Ltd.). The results are shown in Table 1.

### [Measurement of oxygen storage and release capacity at 750°C]

The cerium oxide stabilized zirconium oxide compositions of Examples and Comparative Examples were subjected to a reduction treatment at 750°C for 10 minutes in a flow of 5%H₂/Air with BELCAT II manufactured by MicrotracBEL Corp., and then an oxygen storage and release capacity (OSC) was calculated from an amount consumed by introduction of an O₂ pulse. The results are shown in Table 1.

### [Measurement of conductivity at 700°C]

The cerium oxide stabilized zirconium oxide compositions of Examples and Comparative Examples were molded at a pressure of 1.0 t/cm² for 2 minutes using a cold isostatic pressing method, and then heat-treated at 1450°C for 2 hours in the air in an electric furnace to obtain a sintered sample for measurement. Using a 4-terminal method, the conductivity of the obtained sintered sample was measured with SI1287 manufactured by Solartron Analytical. The conductivity was measured in an electric furnace maintained at 700°C. The results are shown in Table 1.

### [Measurement of conductivity at 800°C]

The conductivity of the sintered sample was measured in the same manner as in "Measurement of conductivity at 700°C" except that the conductivity was measured in an electric furnace maintained at 800°C. The results are shown in Table 1.

### [Measurement of conductivity at 900°C]

The conductivity of the sintered sample was measured in the same manner as in "Measurement of conductivity at 700°C" except that the conductivity was measured in an electric furnace maintained at 900°C. The results are shown in Table 1.

### [Evaluation of sintering characteristics]

Stabilized zirconia containing 10 mol% of Sc and 1 mol% of Ce (manufactured by DAIICHI KIGENSO KAGAKU KOGYO CO., LTD.), 15% by mass of PVB (polyvinyl butyral) with respect to the stabilized zirconia, and 15% by mass of phthalic acid ester were mixed, ethanol was added so that the stabilized zirconia solid content concentration was 60% by mass, and the mixture was slurried by a ball mill, and a green sheet was formed by a casting method.

On the obtained green sheet, 15% by mass of PVB and 15% by mass of phthalic acid ester were mixed with respect to the cerium oxide stabilized zirconium oxide compositions of Examples and Comparative Examples and the cerium oxide stabilized zirconium oxide, and ethanol was added so that the cerium oxide stabilized zirconium oxide solid content concentration was 60% by mass. The slurry formed by a ball mill was applied by a casting method, and the obtained sheet was subjected to a degreasing treatment at 500°C for 2 hours in the air in an electric furnace. Subsequently, heat treatment was performed at 1450°C for 2 hours in the air in an electric furnace to obtain a sintered body. Defects including cracking and peeling were visually confirmed for the obtained sintered body.

A case where there was no cracking or peeling was evaluated as ○, and a case where there was any one or both of cracking and peeling was evaluated as ×. The results are shown in Table 1.

The reason why the cerium oxide stabilized zirconium oxide compositions of Examples and Comparative Examples were formed on the green sheet and the sintering characteristics were evaluated is because of a test assuming the production of an electrode.

**[Table 1]**

| | ZrO₂+HfO₂ | CeO₂ | Sc₂O₃ | Y₂O₃ | Yb₂O₃ | Firing temperature | Specific surface area | 750°C OSC | Conductivity at 700°C | Conductivity at 800°C | Conductivity at 900°C | Sintering characteristics |
|---|---|---|---|---|---|---|---|---|---|---|---|---|
| | mol% | mol% | mol% | mol% | mol% | °C | m²/g | µmol/m² | S/cm | S/cm | S/cm | - |
| Example 1 | 88 | 10 | 2 | - | - | 1095 | 7.6 | 17.2 | 0.003 | 0.008 | 0.017 | 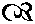 |
| Example 2 | 85 | 10 | 5 | - | - | 1115 | 8.6 | 15.2 | 0.009 | 0.023 | 0.048 | 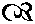 |
| Example 3 | 82 | 10 | 8 | - | - | 1080 | 8.6 | 15.5 | 0.022 | 0.057 | 0.114 | 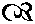 |
| Example 4 | 80 | 10 | 10 | - | - | 1090 | 8.8 | 14.7 | 0.031 | 0.075 | 0.141 | 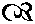 |
| Example 5 | 78 | 10 | 12 | - | - | 1075 | 9.3 | 14.2 | 0.015 | 0.042 | 0.089 | 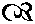 |
| Example 6 | 78 | 20 | 2 | - | - | 1145 | 8.4 | 30.1 | 0.002 | 0.005 | 0.012 | 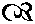 |
| Example 7 | 75 | 20 | 5 | - | - | 1115 | 8.4 | 29.7 | 0.006 | 0.017 | 0.037 | 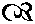 |
| Example 8 | 72 | 20 | 8 | - | - | 1095 | 8.6 | 28.5 | 0.012 | 0.033 | 0.070 | 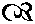 |
| Example 9 | 70 | 20 | 10 | - | - | 1080 | 8.7 | 27.3 | 0.019 | 0.051 | 0.093 | 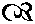 |
| Example 10 | 68 | 20 | 12 | - | - | 1100 | 9.0 | 26.1 | 0.006 | 0.018 | 0.045 | 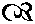 |
| Example 11 | 68 | 30 | 2 | - | - | 1170 | 8.4 | 35.3 | 0.001 | 0.004 | 0.009 | 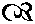 |
| Example 12 | 65 | 30 | 5 | - | - | 1130 | 8.5 | 34.5 | 0.005 | 0.015 | 0.034 | 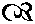 |
| Example 13 | 62 | 30 | 8 | - | - | 1125 | 9.1 | 31.1 | 0.006 | 0.017 | 0.040 | 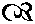 |
| Example 14 | 60 | 30 | 10 | - | - | 1020 | 9.1 | 28.4 | 0.008 | 0.020 | 0.053 | 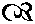 |
| Example 15 | 58 | 30 | 12 | - | - | 1115 | 9.7 | 26.8 | 0.002 | 0.009 | 0.024 | 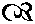 |
| Example 16 | 58 | 40 | 2 | - | - | 1145 | 9.2 | 35.6 | 0.001 | 0.003 | 0.008 | 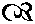 |
| Example 17 | 55 | 40 | 5 | - | - | 1120 | 9.3 | 33.9 | 0.003 | 0.010 | 0.024 | 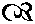 |
| Example 18 | 52 | 40 | 8 | - | - | 1120 | 9.6 | 30.9 | 0.003 | 0.009 | 0.022 | 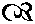 |
| Example 19 | 50 | 40 | 10 | - | - | 1030 | 9.5 | 29.0 | 0.003 | 0.010 | 0.026 | 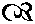 |
| Example 20 | 48 | 40 | 12 | - | - | 1110 | 9.6 | 28.6 | 0.001 | 0.004 | 0.012 | 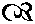 |
| Example 21 | 82 | 10 | - | 8 | - | 1160 | 9.8 | 12.1 | 0.009 | 0.025 | 0.052 | 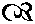 |
| Example 22 | 81.5 | 12.5 | - | 6 | - | 1110 | 12.2 | 13.9 | 0.009 | 0.023 | 0.049 | 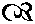 |
| Example 23 | 71 | 25 | - | 4 | - | 1110 | 12.3 | 23.6 | 0.003 | 0.009 | 0.020 | 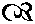 |
| Example 24 | 82 | 10 | - | - | 8 | 1160 | 8.7 | 14.7 | 0.014 | 0.034 | 0.069 | 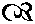 |
| Example 25 | 75 | 20 | - | - | 5 | 1160 | 9.2 | 30.8 | 0.004 | 0.010 | 0.030 | 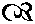 |
| Comparative Example 1 | 89 | 1 | 10 | - | - | 980 | 10.1 | 1.3 | 0.039 | 0.096 | 0.179 | 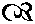 |
| Comparative Example 2 | 92 | - | - | 8 | - | 1130 | 7.4 | - | 0.016 | 0.043 | 0.087 | 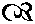 |
| Comparative Example 3 | 68 | 20 | 12 | - | - | 850 | 30.4 | 19.8 | 0.006 | 0.017 | 0.043 | 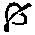 |
| Comparative Example 4 | 68 | 20 | 12 | - | - | 1300 | 3.0 | 27.4 | 0.004 | 0.010 | 0.035 | 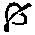 |
| Comparative Example 5 | 50 | 50 | - | - | - | 1050 | 11.7 | 58.5 | 1.2E-04 | 0.001 | 0.003 | 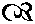 |

### [Measurement of CH₄ conversion, CO₂ conversion, H₂ selectivity, and CO selectivity]

Nickel oxide was mixed with the cerium oxide stabilized zirconium oxide compositions of Examples and Comparative Examples so as to have a content of 60% by mass, and the mixture was subjected to a heat treatment at 1300°C for 2 hours in the air to form a cermet.

A quartz tube (size: inner diameter: 7 mm) filled with the obtained cermet sample was heated to 800°C, and a mixed gas of CH₄ = 22.5 ml/min, CO₂ = 22.5 ml/min, and N₂ = 5 ml/min (mixed gas of CH₄: CO₂: N₂ = 4.5 : 4.5 : 1 in volume ratio) was circulated at a space velocity of 8000 h⁻¹.

The gas flowing through the cermet sample was analyzed by gas chromatography, and the CH₄ conversion, the CO₂ conversion, the H₂ selectivity, and the CO selectivity were calculated. The results are shown in Table 2. 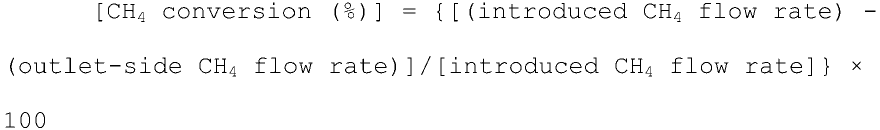 [CH4 conversion (%)] = {[(introduced CH4 flow rate) - (outlet-side CH4 flow rate)]/[introduced CH4 flow rate]} × 100 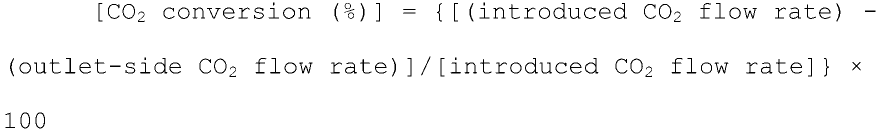 [CO2 conversion (%)] = {[(introduced CO2 flow rate) - (outlet-side CO2 flow rate)]/[introduced CO2 flow rate]} × 100 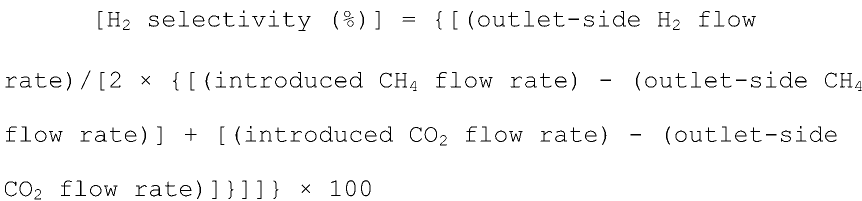 [H2 selectivity (%)] = {[(outlet-side H2 flow rate)/[2 × {[(introduced CH4 flow rate) - (outlet-side CH4 flow rate)] + [(introduced CO2 flow rate) - (outlet-side CO2 flow rate)]}]]} × 100 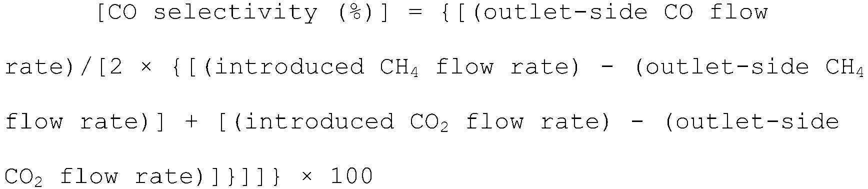 [CO selectivity (%)] = {[(outlet-side CO flow rate)/[2 × {[(introduced CH4 flow rate) - (outlet-side CH4 flow rate)] + [(introduced CO2 flow rate) - (outlet-side CO2 flow rate)]}]]} × 100

### [Measurement of CO₂ detection amount]

The cermet sample after being used in the "Measurement of CH₄ conversion, CO₂ conversion, H₂selectivity, and CO selectivity" was pretreated at 200°C for 20min in a flow of He, and then the temperature was raised to 950°C at 10°C/min in a flow of 50 ml/min of 20%O₂-He (He containing 20 vol% O₂), and the CO₂ detection amount was calculated by a temperature rising oxidation method. The results are shown in Table 2.

In the "Measurement of CH₄ conversion, CO₂ conversion, H₂ selectivity, and CO selectivity", the mixed gas is circulated for two hours.

**[Table 2]**

| | CH₄ conversion % | CO₂ conversion % | H₂ selectivity % | CO selectivity % | CO₂ detection amount mmol/g |
|---|---|---|---|---|---|
| Example 1 | 97.16 | 91.05 | 47.06 | 42.82 | 16.42 |
| Example 2 | 97.15 | 90.18 | 45.56 | 40.99 | 15.59 |
| Example 3 | 97.25 | 90.65 | 45.25 | 40.94 | 14.09 |
| Example 4 | 96.45 | 91.28 | 45.30 | 40.93 | 14.53 |
| Example 5 | 96.32 | 92.26 | 45.14 | 41.49 | 13.58 |
| Example 6 | 96.84 | 89.50 | 45.67 | 41.59 | 13.88 |
| Example 7 | 97.11 | 89.69 | 44.73 | 40.75 | 13.45 |
| Example 8 | 96.88 | 91.53 | 45.83 | 41.61 | 16.15 |
| Example 9 | 96.41 | 88.45 | 45.55 | 41.21 | 14.21 |
| Example 10 | 96.72 | 90.35 | 44.97 | 40.94 | 14.16 |
| Example 11 | 96.72 | 89.90 | 45.62 | 41.73 | 15.48 |
| Example 12 | 96.34 | 88.99 | 46.39 | 41.55 | 15.02 |
| Example 13 | 96.87 | 91.51 | 44.97 | 40.71 | 11.96 |
| Example 14 | 97.18 | 91.18 | 44.81 | 40.79 | 14.97 |
| Example 15 | 97.21 | 91.24 | 44.91 | 40.49 | 15.47 |
| Example 16 | 97.19 | 93.02 | 45.80 | 41.82 | 12.32 |
| Example 17 | 96.78 | 91.83 | 44.64 | 40.90 | 11.79 |
| Example 18 | 96.53 | 91.34 | 44.93 | 40.71 | 13.57 |
| Example 19 | 96.75 | 89.65 | 45.01 | 41.30 | 12.11 |
| Example 20 | 96.70 | 91.18 | 45.09 | 41.38 | 10.34 |
| Example 21 | 96.75 | 93.01 | 46.10 | 40.39 | 15.97 |
| Example 22 | 96.53 | 90.01 | 45.17 | 40.49 | 16.33 |
| Example 23 | 96.97 | 89.98 | 45.23 | 40.48 | 15.06 |
| Example 24 | 96.92 | 93.66 | 44.22 | 40.51 | 15.13 |
| Example 25 | 96.75 | 93.72 | 45.40 | 40.40 | 14.22 |
| Comparative Example 1 | 96.72 | 92.05 | 41.49 | 35.86 | 24.32 |
| Comparative Example 2 | 96.99 | 93.17 | 37.79 | 33.88 | 25.00 |
| Comparative Example 3 | 96.73 | 90.35 | 44.92 | 40.95 | 15.41 |
| Comparative Example 4 | 96.11 | 90.03 | 44.59 | 40.88 | 14.96 |
| Comparative Example 5 | 54.83 | 64.13 | 33.16 | 39.34 | 21.22 |

## Claims

1. A cerium oxide stabilized zirconium composition having a composition represented by formula [1],
wherein the composition has a specific surface area of 5 m²/g or more and 20 m²/g or less:
(ZrO₂)_{1-x-y}(CeO₂)ₓ(M₂O₃)_{y} [1]
(In formula [1], x and y are numbers that satisfy 0.10 ≤ x ≤ 0.40 and 0.02 ≤ y ≤ 0.12, and M represents one or more elements that are selected from the group consisting of scandium, yttrium, and ytterbium).

2. The cerium oxide stabilized zirconium composition according to claim 1, wherein the M is one selected from the group consisting of scandium, yttrium, and ytterbium.

3. The cerium oxide stabilized zirconium composition according to claim 1, wherein the M is scandium.

4. The cerium oxide stabilized zirconium composition according to any one of claims 1 to 3, wherein x and y are numbers that satisfy 0.10 ≤ x ≤ 0.30 and 0.06 ≤ y ≤ 0.10.

5. The cerium oxide stabilized zirconium oxide composition according to any one of claims 1 to 3, wherein y is a number that satisfies 0.08 ≤ y ≤ 0.10.

6. The cerium oxide stabilized zirconium oxide composition according to any one of claims 1 to 3, having an oxygen storage and release capacity of 5 µmol/m² or more at 750°C.

7. The cerium oxide stabilized zirconium oxide composition according to any one of claims 1 to 3, wherein the conductivity at 700°C after heat treatment under the following heat treatment condition A is 9.0×10⁻⁴ S/cm or more.
<Heat treatment condition A>
After molding at a pressure of 1.0 t/cm² for 2 minutes using a cold isostatic pressing method, heat treatment is performed at 1450°C for 2 hours in the air.

8. The cerium oxide stabilized zirconium oxide composition according to any one of claims 1 to 3, wherein the conductivity at 800°C after heat treatment under the following heat treatment condition A is 3.0×10⁻³ S/cm or more.
<Heat treatment condition A>
After molding at a pressure of 1.0 t/cm² for 2 minutes using a cold isostatic pressing method, heat treatment is performed at 1450°C for 2 hours in the air.

9. The cerium oxide stabilized zirconium oxide composition according to any one of claims 1 to 3, wherein the conductivity at 900°C after heat treatment under the following heat treatment condition A is 7.5×10⁻³ S/cm or more.
<Heat treatment condition A>
After molding at a pressure of 1.0 t/cm² for 2 minutes using a cold isostatic pressing method, heat treatment is performed at 1450°C for 2 hours in the air.

10. The cerium oxide stabilized zirconium oxide composition according to any one of claims 1 to 3, wherein the composition is used as a carrier supporting a transition metal.

11. The cerium oxide stabilized zirconium oxide composition according to claim 10, wherein the transition metal is nickel.

12. The cerium oxide stabilized zirconium oxide composition according to any one of claims 1 to 3, wherein after the heat treatment under the following heat treatment condition B, when a mixed gas of CH₄ : CO₂ : N₂ = 4.5 : 4.5 : 1 is circulated at a space velocity of 8000 h⁻¹ at 800°C, a CH₄ conversion is 90% or more, a CO₂ conversion is 85% or more, a H₂ selectivity is 40% or more, and a CO selectivity is 40% or more.
<Heat treatment condition B>
Nickel oxide is mixed with the composition so as to have a content of 60% by mass, and the mixture is subjected to a heat treatment at 1300°C for 2 hours in the air to form a cermet.
